# EUROPÄISCHE PATENTANMELDUNG

(11) **EP 1 538 864 A2**
(43) Veröffentlichungstag der Anmeldung: **08.06.2005**
(21) Anmeldenummer: 04106149.0
(22) Anmeldetag: 29.11.2004
(51) Int. Cl.: H04Q 11/04

(54) **Schaltungsanordnung zum Schutz gegen Überspannungen und Überströme**

(30) Priorität: 03.12.2003 DE 10356497
(71) Anmelder: SIEMENS AKTIENGESELLSCHAFT, 80333 München (DE)
(72) Erfinder: Kastner, Hans-Günther, 82057 Icking (DE); Skobranek, Norbert, 81375 München (DE)

(57) **Zusammenfassung**

Die Schaltungsanordnung offenbart einen reversiblen Schutz auch bei Netzberührung unter Einhaltung der für die Übertragungstechnik, Speisung und Überspannungsschutz vorgegebenen Standards, wobei jeweils in Reihe zu einem in Hybridtechnik hergestellten Gleichstromwiderstand ein in thermischer Wirkverbindung mit dem Gleichstromwiderstand stehender PTC-Widerstand vorgesehen ist.

## Beschreibung

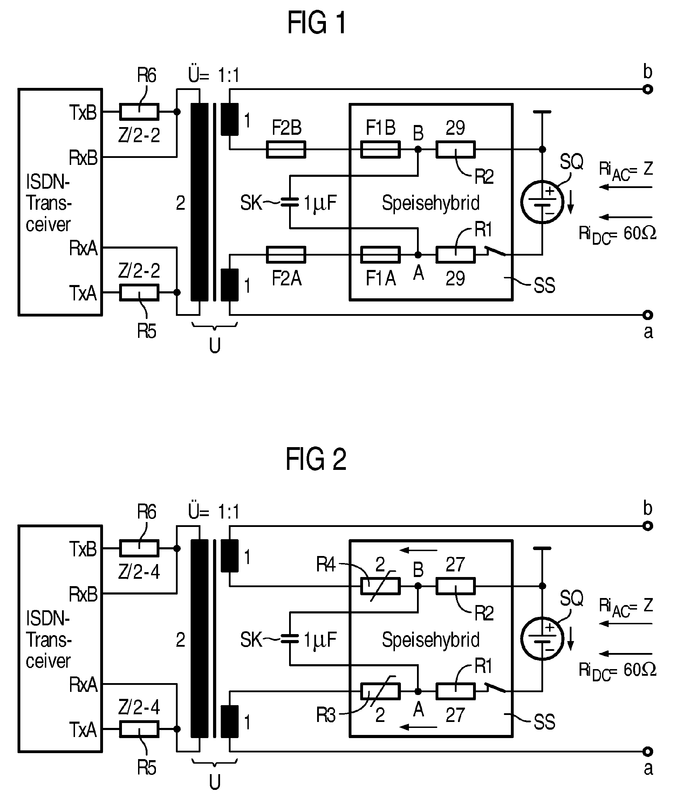

Die in Betrieb zu nehmenden vermittlungsseitigen Telekommunikationsanschlüsse müssen neben ihren spezifischen übertragungstechnischen Anforderungen unter anderem die in den Standards festgelegten Schutzbestimmungen nach ITU-T, K.20 bezüglich Überspannungen und Überströmen einhalten. Bei vermittlungsseitigen Telekommunikationsanschlüssen, die auch eine Speiseschaltung zur Speisung der CPE (Customer Premises E-quipment) über die Anschlussleitung enthalten, werden die Anforderungen entsprechend den in ITU-T, K.20 festgelegten Basic Test Levels bezüglich einer Netzberührung mit 230 Volt durch den Einsatz von Sicherungen, wie in Figur 1 dargestellt, erfüllt. Die Anforderungen entsprechend den in ITU-T, K.20 festgelegten Enhanced Test Levels können mit Sicherungen nicht erfüllt werden, da bei diesen 3 von 8 Netzberührungstests unbeschadet überstanden werden müssen.

Darüber hinaus muss ein vermittlungsseitiger Telekommunikationsanschluss mit Speiseschaltung den Anforderungen bezüglich Gleichstrom- und Wechselstromwiderstand genügen. Die einzuhaltenden Anforderungen bezüglich eines Telekommunikationsanschlusses stehen in den entsprechenden Standards. Z. B. sind die Anforderungen an einen vermittlungsseitigen ISDN Basic Access in ETSI TS 102 080 bzw. in 1TR 216 (Deutsche Telekom AG) für die übertragungstechnischen Eigenschaften und für eine niederohmige, erdsymmetrische Spannungseinspeisung angegeben.

In Figur 1 ist ein derartiger Basic-Access-Anschluss wiedergegeben. Die Speisung eines Teilnehmeranschlusses erfolgt über eine vermittlungsseitig angeordnete Spannungsversorgung von -97 Volt. Der gleichstrommäßige Innenwiderstand des Teilnehmeranschlusses, wie er bei 1TR 216 definiert ist, soll dabei zwischen der Leerlaufspannung und der Spannung bei maximalem Speisestrom nur eine Differenz von 3 V verursachen. Damit ist der Innenwiderstand mit 3 V / 50 mA zu maximal 60 Ohm +/- Bauteiletoleranzen definiert. Wegen der einzuhaltenden erdsymmetrischen Ausprägung ist der Gleichstromwiderstand auf jeweils 30 Ohm bis zum Anschlusspunkt der a- und b-Ader der Teilnehmeranschlussleitung aufgeteilt.

Aufgabe der Erfindung ist es, eine weitere Schaltungsanordnung für eine Speiseschaltung anzugeben, die einerseits ETSI TS 102 080 bzw. 1TR 216 erfüllt und andererseits einen vollständigen Schutz gegen Überspannungen und Überströme nach ITU-T, K.20, Enhanced Test Levels, aufweist.

Die Erfindung wird durch die Merkmale des Patentanspruches 1 gelöst.

Die Erfindung bringt den Vorteil mit sich, dass die Schaltungsanordnung keine Sicherungen mehr aufweist.

Die Erfindung bringt den Vorteil mit sich, dass kein Ausfall der Teilnehmeranschlussschaltung nach einer Netzberührung mit der a-Ader oder b-Ader oder beiden erfolgt.

Die Erfindung bringt den Vorteil mit sich, dass kein Sicherungstausch und damit kein Austausch von Teilnehmeranschlussbaugruppen nach Netzberührung notwendig wird.

Die Erfindung bringt den Vorteil mit sich, dass keine Reparaturkosten anfallen.

Die Erfindung bringt den Vorteil mit sich, dass Vorschalteinrichtungen, die bisher für die Enhanced Test Levels nach ITU-T, K.20, notwendig waren, vermieden werden und damit Zusatzkosten erspart bleiben.

Die Erfindung bringt den Vorteil mit sich, dass der Überspannungsschutz für Blitzbeeinflussungen und für Induktionsspannungen aus Starkstromnetzen wesentlich verbessert wurde.

Weitere Besonderheiten der Erfindung werden aus den nachfolgenden Erläuterungen zu der Figur des Ausführungsbeispiels ersichtlich.

Es zeigen:
- Figur 1: eine Schaltungsanordnung gemäß dem Stand der Technik und
- Figur 2: eine weitere Schaltungsanordnung.

In Figur 1 ist, wie eingangs ausgeführt, u. a. eine Speiseschaltung einer vermittlungsseitigen Teilnehmeranschlussschaltung abgebildet. Diese Speiseschaltung SS ist eingangsseitig mit einer, beispielsweise -97 Volt erzeugenden, Spannungsquelle SQ verbunden. Aufgrund der erdsymmetrischen Leitungsausprägung des Teilnehmeranschlusses ist die Speiseschaltung zum Anschlusspunkt A bzw. B mit einem Widerstand R1, R2 von etwa 29 Ohm dimensioniert. Auf einer als Hybridschaltung ausgebildeten Speiseschaltung ist in Reihe zu den Gleichstromwiderständen R1, R2 jeweils eine erste Sicherung F1A, F1B angeordnet. Zwischen den Anschlusspunkten A, B ist ein kapazitives Element, ein Speisebrückenkondensator SK, angeordnet. Der Speisebrückenkondensator SK überbrückt wechselstrommäßig die Gleichstromwiderstände R1, R2, so dass sie weder den wechselstrommäßigen Innenwiderstand beeinflussen noch die überbrückbare Leitungslänge der Anschlussleitung reduzieren.

Die Ausgänge der Speiseschaltung sind jeweils über eine zweite Sicherung F2A, F2B mit jeweils einem Anschluss von zwei sekundärseitig angeordneten Wicklungen eines Übertragers U verbunden. Diese sekundärseitigen Übertragerwicklungen weisen jeweils einen Widerstandswert von etwa 1 Ohm auf. Die jeweils anderen Anschlüsse der sekundärseitigen Übertragerwicklungen sind mit den Anschlusspunkten a, b verbunden, an die die Anschlussleitung zum Teilnehmer angeschlossen wird.

Die erste Sicherung F1A, F1B und die zweite Sicherung F2A, F2B sind im Leitungszug zwischen A, a bzw. B, b angeordnet, damit nach dem Auslösen einer Sicherung der Speisebrückenkondensator SK von der zwischen a und b anliegenden Überspannung abgetrennt ist. Dies ermöglicht den Einsatz von Kondensatoren mit geringeren Spannungsanforderungen.

Der Übertrager U mit einem Übersetzungsverhältnis ü = 1:1 dient zur galvanischen Trennung des Übertragungssignals vom Speisekreis der Teilnehmeranschlussleitung. Die primärseitige Übertragerwicklung ist über Widerstände R5, R6, beispielsweise mit den Senderausgängen TxA, TxB des ISDN-Transceivers verbunden. Die Widerstände R5, R6 dienen zur Zweidraht-Vierdraht-Umsetzung der Übertragungssignale. Zur Trennung von Sende- und Empfangssignal greift der Empfänger am Eingang RxA, RxB das Empfangssignal an diesen Widerständen ab. Das ebenfalls zurückgeführte Sendesignal wird vom Empfänger durch das Echokompensationsverfahren eliminiert. Um das größtmögliche Empfangssignal zu erhalten, stellt im Idealfall die Summe der Widerstände R5, R6 den Wechselstromwiderstand Z dar. Bei der Dimensionierung von R5, R6 wurden die Widerstände der Übertragerwicklungen mit insgesamt 4 Ohm berücksichtigt, um an den Anschlüssen a, b den erforderlichen Wechselstromwiderstand Z zu erzielen.

Nach Norm ist zwischen den a/b-Anschlüssen vermittlungsseitig ein Wechselstromwiderstand von 150 Ohm bei einer Datenübertragung mit einer 4B3T-Kodierung bzw. ein Wechselstromwiderstand von 135 Ohm bei einer Datenübertragung mit einer 2B1Q-Kodierung einzuhalten.

In Figur 2 ist eine vermittlungsseitige Teilnehmeranschlussschaltung, entsprechend der in Fig. 1 dargestellten, wiedergegeben. Hier ist erfindungsgemäß die erste Sicherung F1A, F1B und die zweite Sicherung F2A, F2B durch jeweils ein Sicherungselement R3, R4 sowohl zwischen A, a und B, b ersetzt. Dieses Sicherungselement R3, R4 kann auf der in Hybridtechnik aufgebauten Speiseschaltung integriert werden. Dieses Sicherungselement R3, R4 übernimmt die Aufgabe den vermittlungsseitigen Teilnehmeranschluss gegen Überspannungen und Überströme, insbesondere gegen Überströme, die bei Berührung der Anschlussleitung mit Netzspannungen von 230 Volt entstehen, zu schützen.

Das Sicherungselement ist in Fig. 2 aus einem dritten und vierten Widerstand R3, R4 gebildet, der auch als Kaltleiter bezeichnet wird. Dieser Kaltleiter weist einen positiven Temperaturkoeffizienten auf und wird daher auch als PTC-Widerstand bezeichnet.

Der Wert des Widerstandes R3, R4 ist so klein wie möglich zu wählen, damit er, auch in Verbindung mit seiner Toleranz, einen möglichst geringen Einfluss auf die Kennwerte und Eigenschaften der Gesamtschaltung hat. Auf der anderen Seite können sehr kleine Werte auf Grund der geringen Eigenerwärmung im Überlastfall ihre Sicherungsfunktion nicht mehr erfüllen. Aus diesem Grund ist der PTC-Widerstand mit dem Speisewiderstand thermisch eng verkoppelt, damit der PTC-Widerstand trotz seines kleinen Wertes durch die Fremderwärmung seine Sicherungsfunktion erfüllt.

Bei der in Figur 2 gezeigten Schaltungsausgestaltung wird ein PTC-Widerstand, beispielsweise in Polyswitch-Technologie mit 2 Ohm, als Teilwert des gesamt zulässigen Summenwiderstandes von 30 Ohm verwendet. Der Speisewiderstand R1, R2 wird einerseits durch den Summenwiderstand von 30 Ohm und andererseits durch die einzuhaltende Symmetrie der Speiseschaltung dimensioniert und beträgt jeweils 27 Ohm.

Der PTC-Widerstand befindet sich anstelle der bisher eingesetzten ersten Sicherung im Leitungszug von Punkt A bzw. B zum Anschluss a bzw. b. Dieser PTC-Widerstand kann entweder in unmittelbarer Nähe auf, neben oder auf der Rückseite des zugehörigen Speisewiderstandes R1, R2 angeordnet werden. Dies bringt den Vorteil mit sich, dass die thermische Kopplung zwischen dem Widerstand mit 27 Ohm und dem PTC-Widerstand erhöht wird. Die thermische Kopplung bringt weiter den Vorteil mit sich, dass auch schon bei kleinen Strömen wie z.B. bei 0,5 A der PTC-Widerstand erwärmt wird und dadurch sein Widerstandswert sich so erhöht, dass die Sicherungsfunktion erfüllt wird. Die thermische Kopplung bringt den zusätzlichen Vorteil mit sich, dass kleinere Widerstandswerte für den dritten und vierten Widerstand R3, R4 wählbar sind und damit sein Einfluss auf alle Eigenschaften des Teilnehmeranschlusses weiter minimiert werden konnte.

Im Vergleich zur Schaltungsanordnung nach Figur 1 werden mit einer Anpassung der Speisewiderstände R1, R2 von 29 auf 27 Ohm und einer Reduzierung der im wesentlichen den Innenwiderstand bestimmenden Widerstände R5, R6 um 2 Ohm alle oben angeführten Standards bezüglich der genannten übertragungs- und speisetechnischen Anforderungen erfüllt. Die Erfindung bringt den Vorteil mit sich, dass damit ein reversibler Schutz der Schaltungsanordnung implementiert ist. Die Erfindung bringt den Vorteil mit sich, dass keine Reparatur bzw. kein Austausch von Sicherungen nach erfolgter Netzberührung zu erfolgen hat.

## Patentansprüche

**1.** Schaltungsanordnung zum Schutz gegen Überspannungen und Überströme, mit einer Spannungsquelle (SQ) deren erster Anschluss mit einem ersten Anschluss eines ersten Widerstandes (R1) und deren zweiter Anschluss mit einem ersten Anschluss eines zweiten Widerstandes (R2) verbunden ist und ein die zweiten Anschlüsse des ersten und zweiten Widerstandes (R1, R2) verbindendes kapazitives Element (SK) aufweist,
**dadurch gekennzeichnet,**
**dass** zwischen einem ersten Anschluss (a) der Schaltungsanordnung und dem zweiten Anschluss des ersten Widerstandes (R1) ein dritter Widerstand (R3) sowie zwischen einem zweiten Anschluss (b) der Schaltungsanordnung und dem zweiten Anschluss des zweiten Widerstandes (R2) ein vierter Widerstand (R4) mit einem positiven Widerstandskoeffizienten angeordnet ist, wobei das Widerstandsverhältnis der Gleichstromwiderstände zwischen dem dritten und ersten Widerstand (R3, R1) sowie dem vierten und zweiten Widerstand (R4, R2) nicht größer als 0,2 ist und diese jeweils untereinander thermisch gekoppelt sind und die Summe der Widerstände (R1, R2, R3, R4) zwischen 50 und 70 Ohm nicht übersteigt.

**2.** Schaltungsanordnung nach Anspruch 1,
**dadurch gekennzeichnet,**
**dass** die Summe der Widerstände (R1, R2, R3, R4) vorzugsweise 60 Ohm beträgt, wobei der Widerstandswert eine Wiederstandstoleranz von +/- 3% aufweisen kann.

**3.** Schaltungsanordnung nach Anspruch 1,
**dadurch gekennzeichnet,**
**dass** der erste und zweite Widerstand (R1, R2) eine Widerstandstoleranz von kleiner 1% aufweist.

**4.** Schaltungsanordnung nach Anspruch 1,
**dadurch gekennzeichnet,**
**dass** der erste und zweite Widerstand jeweils einen Widerstandswert zwischen 29 und 25 Ohm bei einer Speisespannung von kleiner oder gleich 115 Volt aufweisen.

**5.** Schaltungsanordnung nach Anspruch 1,
**dadurch gekennzeichnet,**
**dass** der dritte und vierte Widerstand (R3,R4) in Polymer-Technologie aufgebaut ist.

**6.** Schaltungsanordnung nach Anspruch 1,
**dadurch gekennzeichnet,**
**dass** die Widerstände (R1, R2, R3, R4) innerhalb einer Hybridschaltung angeordnet sind.

**6.** Schaltungsanordnung nach Anspruch 1,
**dadurch gekennzeichnet,**
**dass** der dritte und vierte Widerstand (R3,R4) in thermischer Wirkverbindung mit dem ersten und zweiten Widerstand (R1, R2) stehen.

**7.** Schaltungsanordnung nach Anspruch 1,
**dadurch gekennzeichnet,**
**dass** der Widerstandswert des dritten und vierten Widerstandes (R3, R4) zwischen 1 und 4 Ohm im störungsfreien Betrieb beträgt.

**8.** Schaltungsanordnung nach Anspruch 1,
**dadurch gekennzeichnet,**
**dass** das Verhältnis der Summe des dritten und vierten Widerstandes (R3, R4) zum Norm-Wechselstromwiderstand bei einer 4B3T-Datenübertragung höchstens 0,06 beträgt.

**9.** Schaltungsanordnung nach Anspruch 1,
**dadurch gekennzeichnet,**
**dass** das Verhältnis der Summe des dritten und vierten Widerstandes (R3, R4) zum Norm-Wechselstromwiderstand bei einer 2B1Q-Datenübertragung höchstens 0,06 beträgt.
